## Europäisches Patentamt

## European Patent Office

## Office européen des brevets

(19)

(11) Publication number: **0 009 594**
**B1**

---

(12) **EUROPEAN PATENT SPECIFICATION**

(45) Date of publication of patent specification: **28.07.82**

(51) Int. Cl.³: **G 06 F 3/02**

(21) Application number: **79103061.2**

(22) Date of filing: **21.08.79**

---

(54) Data processing display terminal with addressable characterising store.

---

(30) Priority: **02.10.78 GB 3900278**

(43) Date of publication of application:
**16.04.80 Bulletin 80/8**

(45) Publication of the grant of the patent:
**28.07.82 Bulletin 82/30**

(84) Designated Contracting States:
**BE CH DE FR GB IT NL SE**

(56) References cited:
**AT - B - 333 800**
**DE - A - 2 602 459**
**FR - A - 2 387 476**
**US - A - 3 375 499**

**IBM TECHNICAL DISCLOSURE BULLETIN, Vol. 19, No. 8, January 1977, New York US ANDREWS: "Upper/lower case and keyboard redefin feature for word processor and electronic keyboard character translation redefinition", pages 2853—2855.**
**EDN, vol. 23, no. 7, April 1978 Denver, US QUINLIVAN "On board backup supply protects**

(73) Proprietor: **International Business Machines Corporation**
**Armonk, N.Y. 10504 (US)**

(72) Inventor: **Hirschman, Joel Allen**
**246 Purple Glen Drive**
**San Jose California 95119 (US)**
Inventor: **Llewelyn, Roger James**
**6 Olivers Battery Gardens**
**Olivers Battery Winchester Hampshire (GB)**
Inventor: **Rogers, Anthony Haygarth**
**Barkleys Crook Hill**
**Braishfield Romsey Hampshire (GB)**

(74) Representative: **Blake, John**
**IBM United Kingdom Patent Operations Hursley Park**
**Winchester Hants, S021 2JN (GB)**

(56) References cited:
**volatile ram data" pages 120 and 122**
**COMPUTER DESIGN, vol. 17, no. 5 May 1978 Concord US "User programmable display terminals adapt to special needs" pages 36 and 38**
**Telescope, Vol. 7, No. 5, 1975, pp 1—10.**
**Datenverarbeitungsanlage 3003, Befehlsliste NV Bs 107/1, vorläufige Ausgabe, May 1063, pp 42—45.**

---

Courier Press, Leamington Spa, England.

Data processing display terminal with addressable characterising store

This invention relates to a data processing display terminal having an addressable store containing characterisation data for the terminal.

Data display terminals are becoming increasingly popular for the entry and retrieval of data to or from and inter-acting with a data processing system. Early display terminals were relatively simple and relied upon the host processor or controller to perform many of the logic operations required during operation. Such terminals are known as "dumb" terminals. In more recent years, so-called "intelligent" display terminals have been developed in which less reliance is placed on the host processor or controller for logic operations. The latest terminals have a data processor within them which controls the various components of the terminal under microprogram control. The presence of the processor allows the terminal to be configured to the particular needs of the users. For example, the operator may be given various options which he or she can select, such as the screen size. This latter term does not refer to the physical size of the display screen but to the maximum number of characters which can be displayed on the screen. Thus for some applications the user may only wish to display up to 1920 characters whereas for others he may wish to display up to 3440 characters on the screen. Clearly it would be advantageous to the user if he could select the screen size for these different applications.

Traditionally, data processing equipment, including data display terminals, has needed to be installed by skilled engineers and/or programmers. It would be advantageous if the equipment could be installed by the user himself without requiring specialized knowledge of the equipment. Generally, with modern data display terminals, certain information must be stored within them so that they can communicate with the host processor. Where the terminal has a number of optional features, for example additional storage, optional input/output devices, etc., information identifying these features must be accessible to the internal processor, or to the host processor.

The IBM (Registered Trademark) 3276 data display terminal incorporates a logic card on which characterising information such as the terminal identification number and feature mix are indicated by means of pluggable program pins whilst other customer-specified information is entered via rocker switches in a customer access panel. United States Patent 3,375,499 and British Patent 1,245,058 (corresponding to Austrian Patent 333,800) disclose, for telephone switching offices and text editing devices respectively, the storage of installation characterization information. However they are not concerned with the flexible installation of data processing display terminals with a number of optional features by an unskilled engineer or programmer.

The invention is concerned with the problem of allowing a person who is unskilled in the installation of data processing equipment flexibly and simply to install a data processing display terminal which has a number of optional features. Thus flexible installation may be performed by a computer operator rather than requiring the services of a skilled computer programmer or engineer.

According to the present invention, a data processing display terminal comprises terminal control means including storage means for controlling features installed in said terminal, a display device, and a keyboard, characterised in that said terminal includes a local data store adapted to contain a terminal feature characterisation data which is a record to indicate to said control means which of a number of optional features are installed in said terminal and which local data store does not depend on power from the terminal power supply to retain said record therein, in that said keyboard is adapted to allow an operator to select characterisation data in accordance with options indicated on said display device, and in that said terminal control means is adapted to control said terminal in accordance with the selected characterisation data.

Preferably the local non-volatile store is a battery-powered CMOS (complementary metal oxide semiconductor) store but alternatively a magnetic bubble memory or electrically alterable read only store could be used.

The invention will now be particularly described, by way of example, with reference to the accompanying drawings, in which:—

Figure 1 is a block schematic of a data display terminal embodying the present invention,

Figure 2 illustrates how a CMOS store is powered within the terminal of Figure 1,

Figure 3 is a block diagram showing how a run/set up switch raises an interrupt to a microprocessor,

Figures 4 to 7 show the appearance of an indicator row on the screen of the display terminal of Figure 1, and

Figure 8 illustrates the position of the indicator row on the screen.

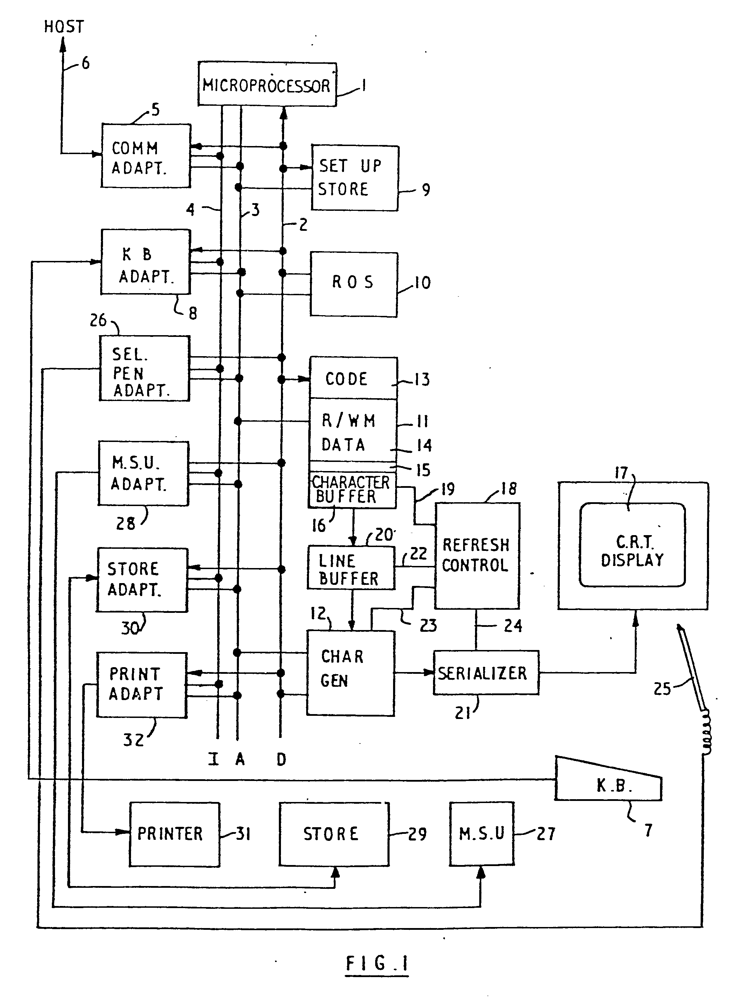

Referring now to Figure 1, a data display terminal includes a microprocessor 1 having a data bus 2, an address bus 3, and an interrupt line 4. Typically the microprocessor 1 may operate on 8-bit data bytes, the data bus 2 being eight bits wide and the address bus 3 being sixteen bits wide. The microprocessor 1 can thus communicate with up to $2^{16}$ locations, transferring one byte to data at a time along the data bus 2. Connected to the busses 2 and 3 is a communications adapter 5 through which the terminal can communicate with a host processor (not shown) via a communications link 6. The adapter 5 serializes and deserializes data streams to and from the host processor and performs bit stuffing/unstuffing, flag recognition and block check code validation in accordance with the particular communication line protocol employed. A limited number of data bytes can be buffered within the adapter 5 which can also subject inbound and outbound data streams to data compaction to allow efficient use of the communication link 6.

A keyboard 7, which may be similar to that supplied with the IBM 3278 display terminal, is connected to the data and address busses 2 and 3 through a keyboard adapter 8 so that the scan code (which represents the particular key operated at the keyboard 7) can be passed to the microprocessor 1. The keyboard 7 incorporates a number of function keys as well as alphanumeric keys.

Also attached to the data and address busses 2 and 3 are a set up store 9, a read only store 10, a random access or read/write memory 11, and a character generator 12. The set up store 9 contains terminal characterisation data and will be described in more detail below. The read only store 10 contains basic microcode for controlling the operation of the microprocessor. The random access memory is divided into sections 13, 14, 15 and 16. Section 13 of R/WM 11 is used for storing additional microcode which can be loaded from the host processor via the adapter 5 and microprocessor 1. The size of section 13 will depend on the particular features installed in the terminal and the amount of microcode contained therein will depend upon the particular application in use.

Section 14 of R/MW 11, and which will also vary in size in accordance with the installed features, stores data received from or to be sent to the host processor. Character data bytes within section 14 and which are to be displayed on a raster scanned cathode ray tube display 17 can be transferred to section 16 which constitutes a character buffer. An indicator row containing messages to the operator to be displayed on the CRT display 17 is contained within section 15 of R/WM 11.

The character generator 12 is preferably constituted by a random access memory so that the bit patterns associated with different character sets can be loaded into it by the microprocessor 1. However it is within the ambit of the present invention for the character generator to be constituted by a read only store in which case it would not be connected to the data address busses 2 and 3. Because the cathode ray tube needs to be refreshed with data to be displayed thereon, refresh control 18 addresses the character buffer 16 via line 19 and loads lines of character bytes therein line by line into a line buffer 20. Each line of character bytes in the line buffer 20 in turn addresses the character generator 12 to derive the bit pattern necessary to display that line of characters on the CRT screen 17. The bit patterns are applied to a serializer 21 which supplies video data to the display 17. Synchronisation of the character buffer 16, line buffer 20, character generator 12 and serializer 21 is maintained by control lines 19, 22, 23 and 24 respectively. The refresh hardware will not be described in more detail because such hardware is well known to those skilled in the art and would not aid in the understanding of the present invention.

It will be appreciated that the invention is not limited to the use of a refreshed display but could be applied to a display which does not need refresh, for example a plasma gas panel display.

As well as the input/output devices already described, other input/output devices may also be connected to the data and address busses 2 and 3. Thus, for example, a selector pen 25 connected to a selector pen adapter 26, a magnetic slot reader unit 27 connected to a magnetic slot unit adapter 28, a data store 29 connected to storage adapter 30, and a local printer 31 connected to printer adapter 32 could all be interfaced with the busses 2 and 3. These devices will not be described in detail but briefly the magnetic slot unit 27 could be similar to that supplied with the IBM 3270 communication system which allows a complete screen to be filled with data by reading phase encoded data on a magnetic recording strip. The store 29 could be a magnetic cassette or diskette store, and the local printer 31 could be any convenient serial printer. The adapters generally will buffer, encode and otherwise manipulate data transmitted to or from their attached devices.

When an input/output device requires service from the microprocessor 1, it will raise an interrupt on line 4. In accordance with the assigned priority level, the microprocessor will then receive or transmit data from or to the interrupting device.

It will be apparent from the above description that the terminal can have many different combinations of features. For example the amount of ROS and R/WM storage, the number and type of input/output devices, could vary considerably. There is a need for characterising information to be stored within the terminal and this is the purpose of the set up store 9 which will now be described in more detail. The characterising information falls into three categories:—

1. Information decided at manufacturing time and used for diagnostic purposes, for example the identification number of the terminal, the installed features such as amount of extra storage and I/O devices, etc,

2. Information required to connect the terminal to the communication network, for example the SDLC (synchronous data link control) address of the terminal, mode of TP (teleprocessing) operation, etc.

3. Information relating to operator options, for example screen capacity, microcode load features, selected variations in TP operation due to network problems such a switched network back up and half speed TP operations, etc.

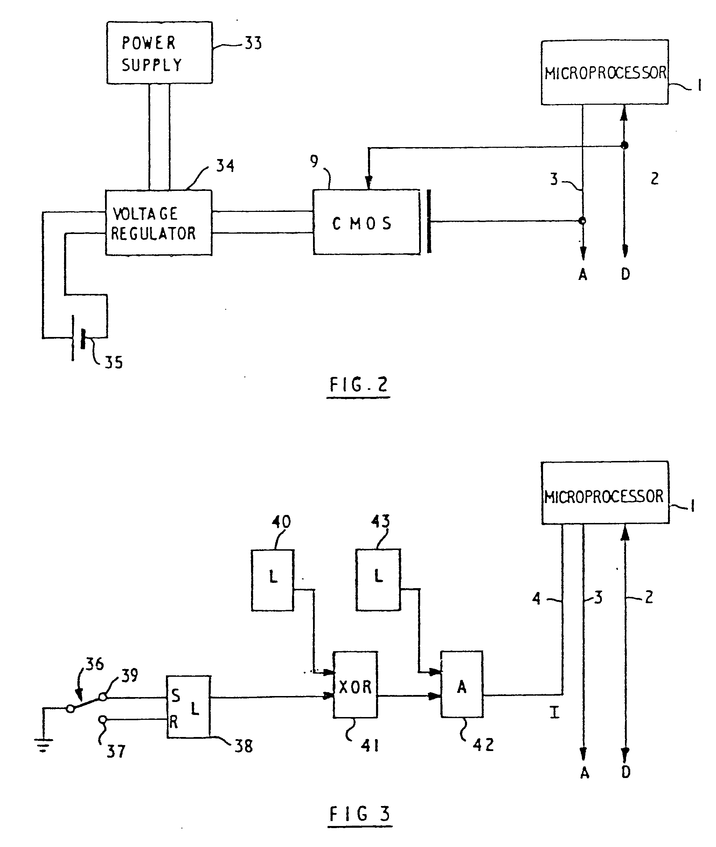

This characterising information is stored in the set up store 9 and is accessible to the microprocessor 1. This information should be retained in the store 9 of the terminal when the power is switched off and to this end, in a preferred embodiment of the invention, it is contained in a small (256×4 bit) CMOS random access memory as shown in Figure 2. The CMOS memory has the characteristic that data can be retained at a standby voltage of 2V which is lower than the normal operating voltage of 5V with a very low current consumption of 10μA. As shown in Figure 2, CMOS 9 is supplied with power from a power supply 33 through a voltage regulator 34. Should the power supply 33 be switched off or fail, the voltage regulator 33 will supply power from battery 35 to retain data stored within the CMOS memory 9. If the battery 35 is a standard memory cell battery, the power-off retention time can be in excess of $3\frac{1}{2}$ years. Details of the voltage regulator 34 are not given but an example of a switching regulator is described in the IBM Technical Disclosure Bulletin, Volume 18, Number 12, May 1976, at pages 4147 to 4149.

Should the battery 35 become defective, data within the CMOS memory 9 will be lost and provision is therefore made to allow the data to be re-entered into the memory 9. Of course, when the terminal is first installed, some means must be provided to allow the characterising information to be entered into the memory 9. This is done using a sequence which will be described below. The characterising information could be held in a read only store which is inherently non-volatile. Some flexibility of the terminal configuration could be provided for by allowing the operator who is configuring the terminal access to different section of the ROS. However the use of a ROS would pose some limitations as to how many features could be added to the terminal after installation and it is therefore preferred if the set up store is writable even if it is built from inherently non-volatile storage. Thus instead of using CMOS as described, the memory 9 could be built from a magnetic bubble memory or from an electrically-alterable semiconductor read only store in which data is retained by the storage of charge within an insulating layer on the surface of the semiconductor store should power fail.

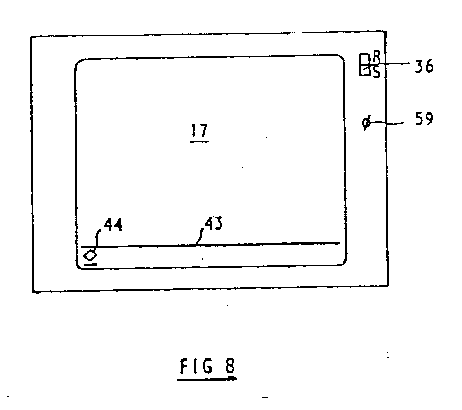

For the following loading sequence, let us assume that the terminal is being powered-on for the first time and that there is no data within the set up store 9. Power is switched on with a mode selection switch 36, Figures 3 and 8, set in the SET up position, that is connected to contact 37, Figure 2. As an alternative to the switch 36, a key or keys on the keyboard could be used. When the mode switch is set to 37, this resets a latch 38 which serves as an anti contact-bounce latch. With the switch in position 39, that is in RUN mode, the latch 38 would be set. Latch 40 is controllable by the microprocessor 1 and specifies the state of the switch 36 which will cause an interrupt to the microprocessor 1. The outputs of latches 38 and 40 are supplied to an EXCLUSIVE OR gate 41 whose output is supplied to an AND gate 42. Latch 43 is controllable by the microprocessor 1 and acts as an interrupt mask. The output of the latch 43 gates the interrupt pulse from XOR gate 41 through AND gate 42 to the interrupt line of the microprocessor.

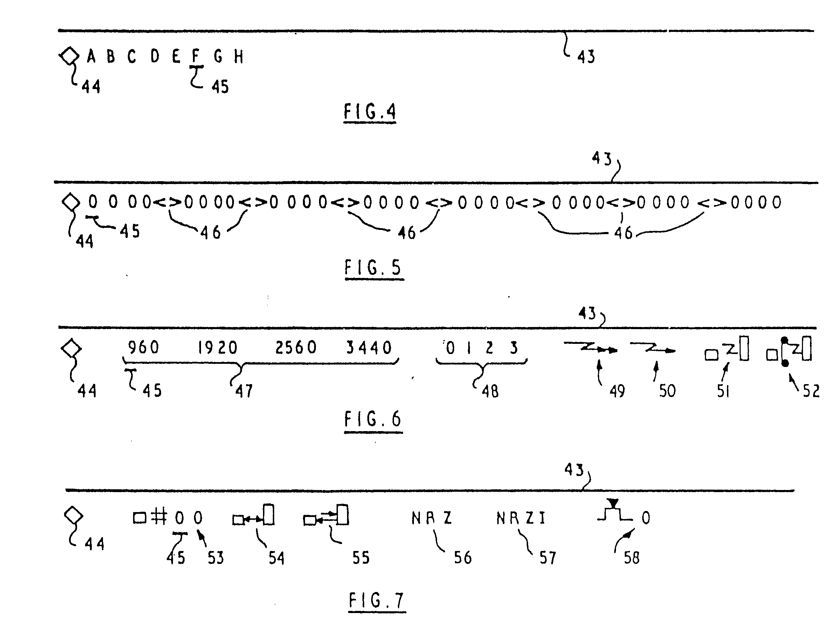

The microprocessor 1 recognises that the switch 36 is in SET UP mode and that there is no data in the set up store 9 and, under microprogram control by microcode stored in ROS 10, Figure 1, loads the indicator row section 15 of R/WM 11 with symbol and character bytes representing that the terminal is in TERMINAL SET UP mode. The refresh hardware displays the indicator row on the screen 17. As shown in Figure 8, the indicator row is beneath a li 43 which separates the indicator row fro: .ne character display area of the screen. Figure 4 shows the first message on the screen and which consists of a diamond-shaped ALTER mode symbol 44 and a string of characters ABC....H....which represent the various keyboard languages such as Austria/Germany, France (QWERTY), France (AZERTY), UK English, American English, etc. In all there may be some 25 or more different keyboard languages which can be used on the keyboard 7 supplied with the terminal. The operator places the cursor 45 under the particular character representing the language on the installed keyboard, using the cursor left or right movement keys, and selects that character by keying the CURSOR SELECT function key (not shown) on the keyboard. It is an important feature of the preferred embodiment of this invention that this action in TERMINAL SET UP mode is performed on keys which are common to all the different language keyboards. In other words, only those keys are used which produce the same symbols and same scan codes whatever the language. When the correct character has been selected, a set of characters representing the set up string is displayed in the indicator row as represented by Figure 5. Again the ALTER mode symbol 44 is displayed and the 32 characters in the string are displayed in groups of four separated by separator symbols 46 which serve to reduce operator keying errors by making it easier to determine where he or she is within the string. Each character position represents a hexadecimal digit in the range 0—9, A—F. Different digits represent different terminal features. For example, the first five digits may represent the terminal ID derived from its serial number. This terminal ID is unique to that terminal and is required for the IBM Systems Network Architecture (SNA) communications protocol. Other digits in the string are assigned different meanings and would include information relating to the type of character generator installed, for example whether it includes APL (A Progamming Language) symbols, whether input/output devices such as a selector pen, magnetic slot reader, local printer, local external storage, internal communications modems, etc., are installed and identifying which type and the amount of ROS 10 and R/WM 11 and its divisions installed on that terminal, and whether the terminal has a numeric lock feature or security key fitted.

The operator is supplied with the hexadecimal digit string to be entered during TERMINAL SET UP mode. If the set up store is empty on power on, as was the case assumed above, all the displayed digits will be 0. The operator enters the appropriate digit by placing the cursor under the appropriate character position, keying the appropriate hexadecimal characters, and keying the CURSOR SELECT key. Character are entered in all 32 digit positions including the last which is a check digit. This check digit can be generated in any suitable manner and helps to ensure that the correct set up string is being entered. For example the check digit could be generated by:—

1. adding all the odd digits,
2. shift left rotating all the even digits except the check digit and add,
3. adding the results of 1 and 2, and
4. taking the least significant digit.

If the check digits (entered and calculated) match, the set up string will be stored in the set up store when the CURSOR SELECT key is operated. If the incorrect string has been keyed, the display will revert to all "0's".

An important advantage is the ability to change the set up string should an additional feature be installed on the terminal; in this case a new set up string would be supplied to the operator for entry into the set up store. Certain of the digits in the string can be reserved for future features which are not available when the terminal is purchased. Each time features are changed or added, the set up string will need to be re-entered with a new check digit.

The TERMINAL SET UP mode described above is a sub-mode of ALTER mode. It was entered automatically because the microprocessor 1 recognised at power on that the terminal set up string was missing from the set up store 9. If the terminal had been powered up with a missing set up string but with the switch 36 set to RUN, an error message would be indicated on the screen until the operator switched over to SET UP mode when the terminal would then be in TERMINAL SET UP mode. If the switch were set to SET UP when the terminal is switched on with the terminal set up string present in the set up store 9, the terminal is placed in ALTER mode and the ALTER mode symbol 44 is displayed in the indicator row on the screen as shown in Figure 8. By keying the character "3" after the symbol 44 and then the CURSOR SELECT key, the terminal would be placed in TERMINAL SET UP mode.

Another sub-mode of ALTER mode is ATTACHMENT BACK UP mode. This is entered from ALTER mode by keying the character "1" after the ALTER mode symbol 44 on the screen and then the CURSOR SELECT key. This causes the options shown in Figure 6 to be displayed on the screen in the indicator row. The options 47 represent the desired screen size and the options 48 represent microcode load features. Options 49 and 50 give a choice between primary TP speed and secondary TP speed respectively. Options 51 and 52 give a choice between SNBU (Switched Network Back-Up)-off and SNBU-on respectively. Options are selected by placing the cursor 45 under the appropriate option and keying the CURSOR SELECT key. Selected options can be highlighted from non-selected options by displaying them flashing, for example.

The operator can proceed from ATTACHMENT BACK UP mode by switching mode switch 36 to RUN to place the terminal in RUN mode or to ALTER mode by positioning the cursor under the ALTER mode symbol 44 and keying the CURSOR SELECT key. A third sub-mode of ALTER mode is ATTACHMENT SET UP mode. This is reached from ALTER mode by keying the character "2" after the symbol 44 and then keying the CURSOR SELECT key. This will cause the options shown in Figure 7 to be displayed in the indicator row on the screen with the current SDLC address and transmit level displayed. Field 53 represents the SDLC address and allows the operator to enter a customer-specified SDLC address. If the keyed digits are outside the hexa-decimal range, the old address will be displayed. Options 54 and 55 represent 2-wire (switched carrier) or 4-wire (continuous carrier) protocols respectively and options 56 and 57 give a choice between NRZ (non-return to zero) and NRZI (non-return to zero inverted) protocols respectively. Finally, field 58 allows the operator to change the transmit level of the integrated modem within the terminal (if installed). The terminal can be returned to ALTER mode by positioning the cursor under the symbol 44 and keying the CURSOR SELECT key.

Whilst in ALTER mode, if any character other than "1", "2" or "3" is keyed, the terminal will remain in ALTER mode when the CURSOR SELECT key is operated. RUN mode, which is the normal operating mode of the terminal, can be reached from ALTER mode or any of its sub-modes by operating the mode switch 36 provided that terminal characterisation data is contained within the set up store 9.

Table I is a flow chart in tabular form representing the various sequences which have been described above.

If the terminal is supplied with a set-up security lock 59 as indicated in Figure 8, the microprocessor 1 will make a security check whilst the terminal is in ALTER mode before allowing the terminal to be placed in ATTACHMENT or TERMINAL SET UP modes. If the lock is enabled, the terminal will be placed in the selected SET UP mode: if the lock is disabled, the keyboard will be locked to prevent change of information within the set up store 9. To aid in ensuring that only correct data is entered by the operator into the set up store 9, the different fields of the set up string and the displayed options can be subjected to cyclic redundancy code check or longitudinal parity check. This check can also be performed when the terminal is powered up to ensure the validity of data read from the store 9 by the microprocessor 1.

Table II is a flow chart in tabular form representing the above-described action taken by the microprocessor 1 on power on of the terminal.

### TABLE I

| Step | Comment |
|---|---|
| 1 | Operator switches to RUN mode |
| 2 | Terminal in RUN mode |
| 3 | Operator switches to SET UP mode |
| 4 | Terminal in ALTER mode |
| 5 | Operator performs STEP 1, 6, 14, 19 or 24 |
| 6 | Operator keys in "3" and CURSOR SELECT |
| 7 | Terminal in TERMINAL SET UP mode |
| 8 | Operator performs STEP 1, 9 or 11 |
| 9 | Operator makes selection and/or enters set up data |
| 10 | Operator performs STEP 6 |
| 11 | Operator positions cursor under ALTER symbol and keys CURSOR SELECT |
| 12 | Terminal in ALTER mode |
| 13 | Operator performs STEP 5 |
| 14 | Operator keys in "2" and CURSOR SELECT |
| 15 | Terminal in ATTACHMENT SET UP mode |
| 16 | Operator performs STEP 6 |
| 17 | Terminal in ALTER mode |
| 18 | Operator performs STEP 5 |
| 19 | Operator keys in "1" and CURSOR SELECT |
| 20 | Terminal in ATTACHMENT BACK UP mode |
| 21 | Operator performs STEP 8 |
| 22 | Terminal in ALTER mode |
| 23 | Operator performs STEP 5 |
| 24 | Operator keys CURSOR SELECT or "other key" and CURSOR SELECT |
| 25 | Terminal in ALTER mode |
| 26 | Operator performs STEP 5 |

### TABLE II

| Step | Comment |
|---|---|
| 1 | Power on |
| 2 | If switch in RUN MODE goes to 3; if not go to 8 |
| 3 | If CMOS good go to 4; if not go to 6 |
| 4 | Initialize display |
| 5 | Display in RUN mode |
| 6 | Error, operator switches to SET UP mode |
| 7 | Display in TERMINAL SET UP mode (see Figures 4 and 5) |
| 8 | If CMOS good go to 9; if not go to 7 |
| 9 | Initialize display |
| 10 | Display in ALTER mode (to allow step 5, Table I) |

The invention has been described with reference to a flexible data display terminal in which optional features can be installed or selected by the operator. It could also be applied to other data terminals in which similar characterising information is required: in this event the display need only be sufficient to display the various options for operator selection etc. and the keyboard need not be a full alphanumeric keyboard but could be a keyboard having a limited number of keys.

**Claims**

1. A data processing display terminal comprising terminal control means (1) including storage means (10, 13) for controlling features installed in said terminal, a display device (17), and a keyboard (7), characterised in that said terminal includes a local data store (9) adapted to contain a terminal feature characterisation data which is a record to indicate to said control means (1) which of a number of optional features are installed in said terminal and which local store (9) does not depend on power from the terminal power supply to retain that second therein, in that said keyboard (7) is adapted to allow an operator to select characterisation data in accordance with options indicated on said display device (17), and in that said terminal control means (1) is adapted to control said terminal in accordance with the selected characterisation data.

2. A terminal as claimed in claim 1, characterised in that said local store (9) is a writable store in which the operator can write characterisation data from said keyboard (7).

3. A terminal as claimed in either preceding claim, characterised in that only keyboard keys which are common to a range of language keyboards which can be installed on said terminal are operable to address said local store (9) at least until the keyboard language characterisation data has been selected from said keyboard (7).

4. A terminal as claimed in any preceding claim, further comprising means (36) for placing said terminal in a first mode for normal operation of said terminal or in a second mode in which said keyboard (7) is enabled to address said local store (9).

5. A terminal as claimed in claim 4, characterised in that said second mode has a first submode during which characterisation data can be written into said local store (9), and at least a second sub-mode during which characterisation data can be selected, said second sub-mode being enabled only after characterisation data has been written in said local store (9) during said first sub-mode.

6. A terminal as claimed in claim 5, characterised in that during said first sub-mode said keyboard (7) is enabled to allow an operator to enter a string of characterisation digits including a check digit and which string is unique to the terminal and indicative of features installed therein, and in that said terminal control means (1) is adapted to enable storage of said characterisation digit string in said local store (9) only when said entered check digit corresponds to a check digit calculated from the digits entered in the string.

7. A terminal as claimed in claim 5 or 6, characterised in that said control means (1) is adapted to determine whether there is characterisation data within said local store (9) when said terminal is powered on and to place said terminal in said first sub-mode when said local store (9) is empty.

8. A terminal as claimed in any of claims 5 to 7, characterised in that it includes a security lock (59), and in that said terminal control means (1) is adapted to disable said keyboard (7) at least in said first sub-mode unless said security lock (59) has been previously operated.

9. A terminal as claimed in any preceding claim, characterised in that said local store (9) is an inherently non-volatile data store.

10. A terminal as claimed in any of claims 1 to 8, characterised in that said local store (9) is a semiconductor store normally powered by the terminal power supply but powered from a battery whenever the terminal power is off.

11. A terminal as claimed in any preceding claim, characterised in that said terminal control means (1) is a microprocessor having a data bus (2) and an address bus (3), and in that said local store (9) and said input and output devices (27, 29, 31) constituting said features are connected to said data and address busses.

12. A terminal as claimed in claim 11, characterised in that a read only store (10) adapted to contain basic microcode and a random access memory (11) adapted to contain additional microcode in accordance with the installed features are connected to the data bus and the address bus.

13. A terminal as claimed in claim 12, characterised in that part (16) of said random access memory (11) constitutes a character display buffer, and in that display logic (18) is provided to address the character buffer to display characters contained therein on said display device (17).

## Revendications

1. Terminal d'affichage et de traitement de données comprenant: des moyens de commande de terminal (1) comportant des moyens d'emmagasinage (10, 13), pour commander les caractéristiques installées dans ledit terminal, un dispositif d'affichage (17) et un clavier (7), caractérisé en ce qu'il comprend une mémoire de données locale (9) pouvant enregistrer des données de caractérisation du terminal indiquant auxdits moyens de commande (1) quelles sont les caractéristiques facultatives installées dans ledit terminal, ladite mémoire locale (9) ne dépendant pas de l'alimentation provenant de la source d'alimentation du terminal de façon à retenir l'enregistrement des données de caractérisation, en ce que ledit clavier (7) peut permettre à un opérateur de sélectionner des données de caractérisation conformément aux options indiquées sur ledit dispositif d'affichage (17), et en ce que lesdits moyens de commande de terminal (1) peuvent commander ledit terminal conformément aux données de caractérisation sélectionnées.

2 Terminal selon la revendication 1, caractérisé en ce que ladite mémoire locale (9) est une mémoire à écriture de telle sorte que l'opérateur peut y écrire des données de caractérisation provenant dudit clavier (7).

3. Terminal selon l'une ou l'autre des deux revendications précédentes, caractérisé en ce que seules les touches du clavier qui sont communes à une gamme de claviers de langage pouvant être installés sur ledit terminal, peuvent adresser ladite mémoire locale (9) au moins jusqu'à ce que les données de caractérisation du langage du clavier aient été sélectionnées à partir dudit clavier (7).

4. Terminal selon l'une quelconque des revendications précédentes, comprenant en outre des moyens (36) pour placer ledit terminal dans un premier mode de fonctionnement normal ou dans un second mode dans lequel ledit clavier (7) peut adresser ladite mémoire locale (9).

5. Terminal selon la revendication 4, caractérisé en ce que ledit second mode a un premier sous-mode durant lequel des données de caractérisation peuvent être écrites dans ladite mémoire locale (9), et au moins un second sousmode durant lequel des données de caractérisation peuvent être sélectionnées, ledit second sous-mode étant établi uniquement après que les données de caractérisation ont été écrites dans ladite mémoire locale (9) durant ledit premier sous-mode.

6. Terminal selon la revendication 5, caractérisé en ce que durant ledit premier sousmode, ledit clavier (7) est conditionné pour permettre à un opérateur d'entrer une chaîne de caractères de caractérisation comprenant un caractère de vérification, ladite chaîne étant propre au terminal et indiquant les caractéristiques qui y sont installées, et en ce que lesdits moyens de commande de terminal (1) permettent l'emmagasinage de ladite chaîne de caractères dans ladite mémoire locale (9) uniquement lorsque ledit caractère de vérification introduit correspond à un caractère de vérification calculé à partir des caractéres de la chaîne.

7. Terminal selon la revendication 5 ou la revendication 6, caractérisé en ce que lesdits moyens de commande (I) peuvent déterminer s'il y a des données de caractérisation dans ladite mémoire locale (9) lorsque ledit terminal est sous tension, et placer ledit terminal dans ledit premier sous-mode lorsque ladite mémoire locale (9) est vide.

8. Terminal selon l'une quelconque des revendications 5 à 7, caractérisé en ce qu'il comprend un verrou de sécurité (59), et en ce que lesdite moyens de commande de terminal (1) peuvent déconditionner ledit clavier (7) au moins dans ledit premier sous-mode à moins que ledit verrou de sécurité (59) ait été actionné préalablement.

9. Terminal selon l'une quelconque des revendications précédentes, caractérisé en ce que ladite mémoire locale (9) est une mémoire non volatile.

10. Terminal selon l'une quelconque des revendications 1 à 8, caractérisé en ce que ladite mémoire locale (9) est une mémoire à semi-conducteurs normalement alimentée par la source d'alimentation du terminal mais qui est alimentée par une batterie chaque fois que le terminal est hors tension.

11. Terminal selon l'une quelconque des revendications précédentes, caractérisé en ce que lesdits moyens de commande de terminal (1) sont constitués par un microprocesseur ayant un bus de données (2) et un bus d'adresses (3), et en ce que ladite mémoire locale (9) et les moyens d'entrée et de sortie (27, 29, 31), sont connectés auxdits bus de données et d'adresses.

12. Terminal selon la revendication 11, caractérisé en ce qu'une mémoire à lecture seulement (10) pouvant contenir un microcode fondamental et une mémoire à accés sélectif (11) pouvant contenir un autre microcode conformément aux caractéristiques installées sont connectées audit bus de données (2) et audit bus d'adresses (3).

13. Terminal selon la revendication 12, caractérisé en ce qu'une portion (16) de ladite mémoire à accès sélectif (11) constitue un dispositif tampon d'affichage de caractères, et en ce qu'une logique d'affichage (18) est utilisée pour adresser la mémoire tampon de caractères afin d'afficher des caractères qu'il contient sur ledit dispositif d'affichage (17).

## Patentansprüche

1. Datenverarbeitungs-Endgerät mit Sichtanzeige, enthaltend Endgerät-Steuerbaueinheiten (1) mit hierin enthaltenen Speicherbaueinheiten (10, 13), um in besagtem Endgerät installierte Zusatzeinrichtungen bzw. -vorkehrungen zu steuern, eine Sichtanzeige-Baueinheit (17) und eine Tastatur-Baueinheit (7), gekennzeichnet dadurch, daß besagtes Endgerät einen derart ausgeführten Datenspeicher (9) enthält, daß hierin Daten zur Charakterisierung von Endgerät-Zusatzeinrichtungen und -vorkehrungen vorliegen, welche als Datensatz besagten Steuerbaueinheiten (1) anzeigen, welche aus einer Anzahl von wahlweise möglichen Zusatzeinrichtungen bzw. -vorkehrungen in besagtem Endgerät installiert sind und welcher lokale Speicher (9) energieunabhängig von der Endgerät-Stromversorgung ist, um diesen Datensatz hierin beizubehalten, daß besagte Tastatur-Baueinheit (7) so ausgelegt ist, daß es der Bedienung ermöglicht wird, Charakterisierungsdaten entsprechend de auf der Sichtanzeige-Baueinheit (17) angezeigten Zusatzmöglichkeiten auszuwählen, und daß die Endgerät-Steuerbaueinheiten (1) eingerichtet sind, besagtes Endgerät entsprechend den ausgewählten Charakterisierungseigenschaften zu steuern.

2. Endgerät, wie in Anspruch 1 beansprucht, dadurch gekennzeichnet, daß besagter lokaler Speicher (9) einschreibbar ausgeführt ist, in den die Bedienung Charakterisierungsdaten über die Tastatur-Baueinheit (7) einschreiben kann.

3. Endgerät, wie in irgendeinem obenstehenden Anspruch beansprucht, dadurch gekennzeichnet, daß nur die einer Reihe von Sprachtastatur-Baueinheiten gemeinsamen, in besagtes Endgerät einbaubaren Tasten zur Adressierung besagten lokalen Speichers (9) zumindest, bis die Tastatur-Sprachen-Charakterisierungsdaten über besagte Tastatur-Baueinheit (7) ausgewählt sind, zu bedienen sind.

4. Endgerät, wie in irgendeinem obenstehenden Anspruch beansprucht, fernerhin enthaltend Maßnahmen (36), um besagtes Endgeiät in einen ersten Betriebszustand für Normalbetrieb besagten Endgeräts oder in einen zweiten Betriebszustand zu versetzen, bei dem besagte Tastatur-Baueinbeit (7) freigegeben ist, um besagten lokalen Speicher zu adressieren.

5. Endgerät, wie in Anspruch 4 beansprucht, dadurch gekennzeichnet, daß besagter zweiter Betriebszustand einen ersten Betriebsabschnitt aufweist, während dem Charakterisierungsdaten in besagten lokalen Speicher (9) einschreibbar sind und zumindest einen zweiten Betriebsabschnitt besitzt, während dem Charakterisierungsdaten auswählbar sind, wobei besagter zweiter Betriebsabschnitt nur nach während besagtem ersten Betriebsabschnitt abgeschlossenem Einschreiben von Charakterisierungsdaten in besagten lokalen Speicher (9) freigebbar ist.

6. Endgerät, wie in Anspruch 5 beansprucht, dadurch gekennzeichnet, daß während besagtem ersten Betriebszustand besagte Tastatur-Baueinheit (7) freigebbar ist, um der Bedienung zu gestatten, eine Folge von Charakterisierungs-Digits einschließlich einer Prüfziffer einzugeben, wobei diese Folge dem Endgerät eigentümlich ist und auf die hierin installierten Zusatzeinrichtungen bzw, -vorkehrungen hinweist, und daß besagte Endgerät-Steuerbaueinheiten (1) befähigt sind, die Speicherung besagter Charakterisierungs-Digitfolge im lokalen Speicher (9) nur dann freizugeben, wenn besagte eingegebene Prüfziffer einer Prüfziffer entspricht, die sich aus den in der Folge vorliegenden Digits errechnet.

7. Endgerät, wie in irgeneinem der Ansprüche 5 bis 6 beansprucht, dadurch gekennzeichnet, daß besagte Steuerbaueinheiten (1) derart ausgerüstet sind, daß sie ermitteln können, ob Charakterisierungsdaten inbesagtem lokalen Speicher (9) vorliegen, wenn besagtes Endgerät eingeschaltet wird, und daß besagtes Endgerät in besagten ersten Batriebsabschnitt versetzt wird, wenn besagter lokaler Speicher (9) leer ist.

8. Endgerät, wie in irgendeinem der Ansprüche 5 bis 7 beansprucht, dadurch gekennzeichnet, daß hierin eine Sicherheitssperre (59) enthalten ist, und daß diese besagten Endgerät-Steuerbaueinheiten (1) so ausgelegt sind, daß besagte Tastatur-Baueinheit (7) zumindest in besagtem erstem Betriebsabschnitt betriebsunfähig bleibt, wenn nicht zuvor besagte Sicherheitssperre (59) betätigt worden ist.

9. Endgerät, wie in irgendeinem obenstehenden Anspruch beansprucht, dadurch gekennzeichnet, daß besagter lokaler Speicher (9) von sich aus ein energieunabhängiger Speicher ist.

10. Endgerät, wie in irgendeinem der Ansprüche 1 bis 8 beansprucht, dadurch gekennzeichnet, daß besagter lokaler Speicher (9) ein normalerweise durch die Endgerät-Stromversorgung gespeister Halbleiterspeicher ist, der aber batterie- bzw. akkumulatorgespeist ist, wenn die Endgerät-Stromversorgung ausfällt.

11. Endgerät, wie in irgendeinem obenstehenden Anspruch beansprucht, dadurch gekennzeichnet, daß besagte Endgerät-Steuerbaueinheiten (1) durch einen Mikroprozessor mit Datenbus (2) und Adreßbus (3) dargestellt sind und daß besagter lokaler Speicher (9) und besagte, die Zusatzeinrichtungen bzw. -vorkehrungen konsituierenden Eingangs- und Ausgangsbaueinheiten an den Daten- und Adreß-Übertragungswegen liegen.

12. Endgerät, wie in Anspruch 11 beansprucht, dadurch gekennzeichnet, daß ein Festspeicher (10) zur Aufnahme und Aufbewahrung eines Grund-Mikrocodes und ein wahlfreier -Zugriff-Speicher (11) zur Zusatzmikrocode-Aufnahme und -Aufbewahrung entsprechend der installierten Zusatzeinrichtungen bzw. -vorkehrungen ausgestattet sind und an den Daten- und Adreß-Übertragungswegen liegen.

13. Endgerät, wie in Anspruch 12 beansprucht, dadurch gekennzeichnet, daß Speicherbereich (16) besagten wahlfreier-Zugriff-Speichers (11) ein Zeichenanzeige-Zwischenregister darstellt und daß das Anzeigeschaltnetz (18) zum Adressieren des Zeichen-Zwischenregisters zwecks Anzeige hierin enthaltener Zeichen mittels der Sichtanzeige-Baueinheit (17) ausgelegt ist.

$\underline{F\,I\,G\,.\,I}$

POWER SUPPLY ~ 33

MICROPROCESSOR ~ I

34

9

VOLTAGE REGULATOR

C M O S

3

2

A

D

35

FIG. 2

MICROPROCESSOR ~ I

40

43

L

L

4

3

2

36 39

S L
R

XOR

A

I

37

38

41

42

A

D

FIG 3

2

◇ A B C D E F G H ⌐43
⌐44    ⊤45

FIG.4

43⌐
◇ 0 0 0 0 <> 0 0 0 0 <> 0 0 0 0 <> 0 0 0 0 <> 0 0 0 0 <> 0 0 0 0 <> 0 0 0 0 <> 0 0 0 0
⌐44  ⌐45    ⌐46    ⌐46    ⌐46

FIG.5

43⌐
◇   960   1920   2560   3440   0 1 2 3        ◻Z◻  ◻Z◻
⌐44  ⊤45    ⌐47         ⌐48      ⌐49  ⌐50   ⌐51    ⌐52

FIG.6

43⌐
◇   ◻#00   ◻→◻  ◻→◻   NRZ   NRZI   ⌐0
⌐44   ⊤45 ⌐53  ⌐54    ⌐55   ⌐56    ⌐57    ⌐58

FIG.7

0 009 594

FIG 8